# FASCICULE DE BREVET EUROPEEN

(11) **EP 1 347 308 B1**
(45) Date de publication et mention de la délivrance du brevet: **01.07.2009**
(21) Numéro de dépôt: 03290691.9
(22) Date de dépôt: 19.03.2003
(51) Int. Cl.: G01S 17/88

(54) **Dispositif de surveillance routière embarqué**
Bordverkehrsüberwachungsvorrichtung
On board traffic monitoring device

(30) Priorité: 21.03.2002 FR 0203546
(43) Date de publication de la demande: 24.09.2003
(73) Titulaire: Peugeot Citroën Automobiles SA, 92200 Neuilly sur Seine (FR)
(72) Inventeur: Hespel, Denis, 91200 Athis-Mons (FR); Charton, Stéphane, 75014 Paris (FR); Lardennois, Xavier, 75011 Paris (FR)

(56) Documents cités:
- EP-A- 0 049 722
- EP-A- 0 512 872
- WO-A-97/17686
- DE-A- 3 903 501
- DE-A- 19 932 094
- FR-A- 2 694 415
- US-A- 4 143 264
- US-A- 5 293 162

## Description

L'invention concerne en général les systèmes d'aide à la conduite de véhicules automobiles.

Plus précisément, l'invention concerne un dispositif de surveillance routière embarqué sur un véhicule routier apte à se déplacer sur une surface de roulement, comprenant au moins un capteur orienté vers cette surface de roulement, ce capteur comprenant un émetteur d'ondes éclairant une section de la surface de roulement située face au capteur, un récepteur captant lesdites ondes émises par l'émetteur et réfléchies par la section, et produisant un signal analogique d'amplitude proportionnelle à l'intensité des ondes captées, des moyens d'avertissement et/ou de contrôle reliés au capteur, des moyens pour détecter des marquages sur la surface de roulement (10), les moyens détectant les marquages sur la surface de roulement (10) par mesure de la variation relative sur un intervalle de temps prédéterminé de l'amplitude du signal analogique (A) produit par le récepteur (30), et des moyens de traitement logique du signal analogique (A), comprenant des moyens pour acquérir des valeurs (Ak) de l'amplitude du signal analogique (A) à des instants d'acquisition (Tk) successifs séparés par une période (T) constante.

Des dispositifs de ce type sont connus de l'art antérieur, en particulier par le brevet européen EP 0 860 001, qui révèle un dispositif utilisant plusieurs capteurs munis d'émetteurs infrarouge. L'intensité du signal reçu par les récepteurs varie en fonction de la réflectivité de la surface éclairée par le capteur, ce qui permet de détecter les discontinuités du revêtement de la surface de roulement. Les applications évoquées dans le brevet sont multiples. Le dispositif peut être utilisé pour détecter la présence de corps étrangers sur la chaussée, comme du sable, de l'herbe ou des plaques de neige. Il peut également avertir le conducteur d'un écart de trajectoire amenant le véhicule à couper une ligne blanche continue. Il peut enfin être utilisé pour lire des codes constitués de marquages disposés sur la chaussée, pour prévenir le conducteur par exemple d'un changement dans la limitation de vitesse ou de l'approche d'un croisement.

Ces discontinuités sont détectées de façon très simple, par comparaison de la valeur du signal reçu par le récepteur avec une valeur de référence. Si le signal détecté dépasse la valeur de référence, on considère par exemple qu'un marquage au sol, plus clair que la chaussée donc plus réflecteur, a été détecté.

Cette stratégie est simple de mise en oeuvre mais présente le défaut d'entraîner de nombreuses fausses alertes, le dispositif confondant des traces ou des irrégularités à la surface de la chaussée avec des marquages à détecter. Par ailleurs, cette stratégie ne permet pas facilement de faire la distinction entre les marquages dont la détection est souhaitée et les marquages parasites comme les repères kilométriques transversaux des autoroutes.

D'autres dispositifs sont connus de l'art antérieur, notamment les brevets américains US 4 143 264 et US 5 293 162. Le brevet US 4 143 264 décrit un dispositif permettant de détecter un marquage au sol. Ce dispositif utilise deux capteurs et des émetteurs qui ne fonctionnent que lorsqu'il fait sombre. Le brevet US 5 293 162 décrit un dispositif permettant de détecter la distance entre un véhicule et un marquage au sol. Ce dispositif, comprenant également un capteur et un émetteur, compare un premier signal et un deuxième signal mesurés à deux instants successifs. Cette comparaison permet ensuite de calculer la distance entre le véhicule et le marquage.

Dans ce contexte, le but de l'invention est de pallier les difficultés mentionnées ci-dessus.

A cet effet, le dispositif de l'invention, par ailleurs conforme à la définition générique qu'en donne le préambule ci-dessus, est essentiellement caractérisé en ce qu'il comprend des moyens pour calculer à chaque instant d'acquisition (Tk) des première et seconde moyennes glissantes (Mn, Mp) respectivement des n et p dernières valeurs acquises, p étant supérieur à n, et la différence (Delta) entre les première et seconde moyennes (Mn) et (Mp), et des moyens pour effectuer un premier test, positif si ladite différence (Delta) est supérieure à une première valeur prédéterminée (DeltaV1), négatif sinon, le dispositif détectant que le véhicule coupe un marquage si ce premier test est positif.

Avantageusement, les moyens de traitement logique peuvent comprendre des moyens pour effectuer un deuxième test si le premier test est négatif, ce deuxième test étant positif si la première moyenne glissante est supérieure à une seconde valeur prédéterminée, et négatif sinon, le dispositif détectant que le véhicule roule le long d'un marquage continu si ce deuxième test est positif.

De préférence, les moyens de traitement logique peuvent comprendre des moyens pour, si le premier test est positif à un instant d'acquisition, calculer une différence entre la valeur prise par la première moyenne glissante à cet instant d'acquisition et la valeur prise par cette première moyenne glissante deux périodes avant cet instant d'acquisition, et effectuer un troisième test, ce troisième test étant positif si ladite différence est supérieure à une troisième valeur prédéterminée, et négatif sinon, le dispositif détectant que le véhicule coupe un marquage transversalement si ce troisième test est positif.

Par exemple les moyens d'avertissement et/ou de contrôle peuvent être activés si à un instant d'acquisition le premier test est positif et le troisième test est négatif, et si la première moyenne glissante reste supérieure pendant une première durée prédéterminée suivant ledit instant d'acquisition à la seconde moyenne glissante calculée audit instant d'acquisition.

Avantageusement, les moyens d'avertissement et/ou de contrôle peuvent être activés si à un instant d'acquisition le premier test est positif et le troisième test est positif, et si ces conditions se vérifient continuellement pendant une deuxième durée prédéterminée suivant ledit instant d'acquisition.

De préférence, les moyens d'avertissement et/ou de contrôle peuvent être activés si à un instant d'acquisition le premier test est négatif et le deuxième test est positif, et si ces conditions se vérifient continuellement pendant une troisième durée prédéterminée suivant ledit instant d'acquisition.

Par exemple, n peut être supérieur ou égal à 6.

Avantageusement, p peut être supérieur ou égal à 48.

De préférence, les première et troisième durées prédéterminées peuvent être au moins égales aux durées nécessaires pour que le véhicule franchisse une distance de 20 cm.

Par exemple, la deuxième durée prédéterminée peut être au moins égale à la durée nécessaire pour que le véhicule franchisse une distance de 20 cm.

D'autres caractéristiques et avantages de l'invention ressortiront clairement de la description qui en est faite ci-après, en référence aux figures annexées parmi lesquelles,
- la figure 1 est une représentation schématique de principe du dispositif de l'invention,
- la figure 2 est une représentation schématique de principe d'un capteur de la figure 1,
- la figure 3 est un algorithme général représentant la stratégie de traitement du signal analogique émis par le détecteur du capteur de la figure 2,
- la figure 4 est un algorithme représentant le traitement d'une demande d'alarme par seuillage absolu,
- la figure 5 est un algorithme représentant le traitement d'une demande d'alarme par seuillage relatif,
- la figure 6 est un algorithme représentant le traitement d'une demande de filtrage transversal, et
- les figure 7a, 7b et 7c représentent les trajectoires de véhicules respectivement coupant une ligne blanche continue longitudinale avec une faible incidence, coupant longitudinalement une ligne blanche interrompue avec une forte incidence, et coupant transversalement une ligne blanche interrompue par une extrémité ainsi que les signaux analogiques correspondants, les trajectoires des véhicules étant représentées par des flêches pointillées et les lignes blanches par des traits forts noirs.

L'invention concerne un dispositif de surveillance routière embarqué sur un véhicule routier apte à se déplacer sur une surface de roulement 10, typiquement une route.

Ce dispositif comprend au moins un capteur C1 orienté vers cette surface de roulement 10, ce capteur C1 comprenant un émetteur d'ondes 20 éclairant une section 11 de la surface de roulement 10 située face au capteur C1, un récepteur 30 captant lesdites ondes émises par l'émetteur 20 et réfléchies par la section 11, et produisant un signal analogique A d'amplitude proportionnelle à l'intensité des ondes captées, et des moyens d'avertissement et/ou de contrôle 40 reliés au capteur C1.

L'émetteur 20 émet des ondes de fréquence prédéterminée et constante, située dans le domaine de l'infrarouge.

L'amplitude du signal capté par le récepteur 30 est fonction de la réflectivité de la section 11 éclairée de la surface de roulement 10 pour des ondes de cette fréquence, cette réflectivité dépendant elle-même de la nature du matériau éclairé et de l'état de la surface de roulement.

Ainsi la surface de roulement elle-même, constituée généralement d'asphalte ou de béton, est relativement plus sombre et moins réfléchissante et est caractérisée par un signal analogique A plus faible. Les bandes ou signes blancs ou jaunes de marquage au sol sont au contraire de couleurs relativement plus claires que la surface de roulement et plus réfléchissantes et sont caractérisées par des signaux analogiques A plus forts.

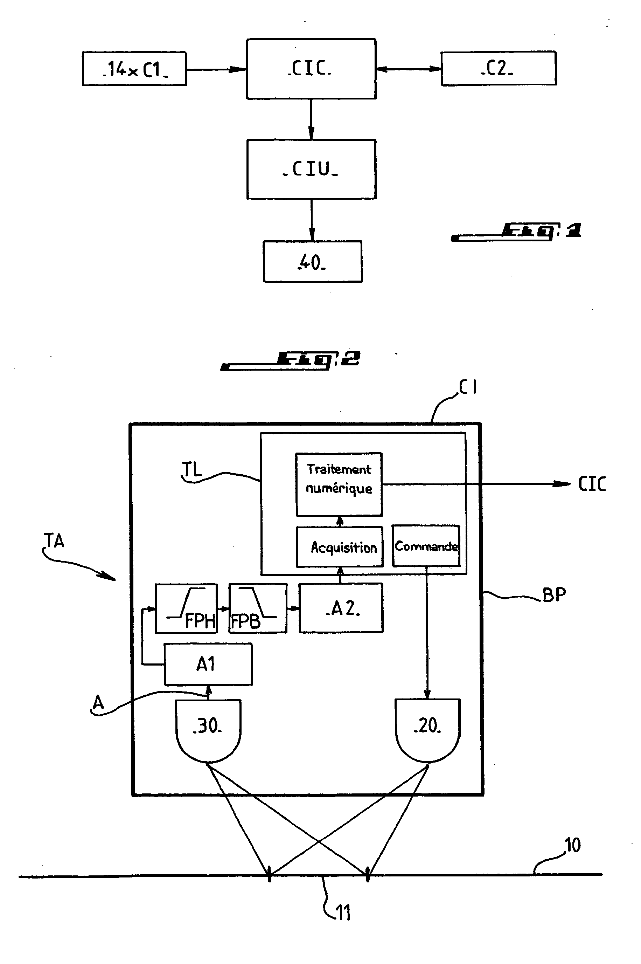

Le dispositif de l'invention vise à détecter ces bandes ou ces signes de marquage et à distinguer les marquages utiles qui doivent entraîner l'activation des moyens d'asservissement et/ou de contrôle 40 des marquages inutiles qui ne doivent pas entraîner cette activation. A cet effet, il comprend, dans un mode de réalisation préféré, un ensemble de quatorze capteurs intelligents C1, un calculateur embarqué C2, une carte d'interface CIC entre les capteurs C1 et le calculateur embarqué C2, et une carte d'interface utilisateur CIU permettant à l'utilisateur d'activer ou de désactiver le dispositif et les moyens d'avertissement et/ou de contrôle 40, comme représenté sur la figure 1.

Les capteurs C1 sont disposés en majorité sous le véhicule, et éclairent la surface de roulement 10 suivant une direction proche de la normale à celle-ci. Cette direction fait typiquement un angle de 20° par rapport à la normale.

Ces capteurs C1 réalisent la détection des marquages et une première étape de traitement des signaux permettant de distinguer certains types de marquages inutiles.

Les capteurs C1 transmettent chacun une information binaire à la carte d'interface calculateur CIC, 1 si une alarme est demandée suite à la détection d'un marquage utile, 0 sinon.

Ces capteurs C1, représentés sur la figure 2, comprennent chacun un émetteur 20 constitué d'une diode émettrice infrarouge, un récepteur 30 constituée d'une photodiode produisant le signal analogique A, un étage de traitement analogique TA du signal analogique A, des moyens de traitement logique TL du signal analogique A, et un boîtier de protection BP renfermant les différents éléments du capteur.

L'étage de traitement analogique TA des capteurs C1 comprend en série un premier amplificateur A1 du signal analogique produit par le récepteur 30, un filtre passe-haut FPH, un filtre passe-bas FPB et un second amplificateur A2.

Le gain du premier amplificateur A1 est adapté aux conditions d'éclairement maximum, c'est-à-dire à la combinaison de l'éclairement dû au soleil et de l'éclairement dû à l'émetteur 20.

Les filtres passe-haut et passe-bas FPH et FPB sont des filtres de Butterworth du second degré.

Le filtre passe-haut FPH permet d'éliminer la composante continue du signal due à la lumière du jour, et celle venant de l'éclairage public caractérisée par une fréquence de 100 Hz. La fréquence de coupure du filtre passe-haut est de 4 kHz, l'atténuation de 45 dB à 100 Hz et de 0,3 dB à 5kHz.

Le filtre passe-bas FPB permet d'éliminer les bruits parasites dus aux amplificateurs et à la commutation du signal de commande de l'émetteur 20. La fréquence de coupure du filtre passe-bas est de 8 kHz, l'atténuation de 40 dB à 10 kHz et de 0,3 dB à 5 kHz.

Le second amplificateur A2 permet de régler le gain du signal de sortie. Il permet d'obtenir un gain uniforme d'un capteur à l'autre. Il est indispensable pour compenser en particulier les variations de sensibilité des émetteurs et des récepteurs d'un capteur à l'autre.

Les moyens de traitement logique TL du signal analogique A comprennent des moyens pour acquérir des valeurs Ak de l'amplitude du signal analogique A après le second amplificateur A2, à des instants d'acquisition Tk successifs séparés par une période T constante, des moyens de traitement numériques de ces valeurs, et des moyens de commande de l'émetteur 20.

Les moyens de commande de l'émetteur 20 génèrent un signal de commande en créneau, pulsé à une fréquence de 5 kHz, soit une période de 200 µs, avec un rapport cyclique positif de 20%, c'est-à-dire des créneaux d'une durée de 40 µs environ. L'intensité du signal est de 60 mA environ.

L'acquisition du signal analogique est synchronisée avec le signal de commande de l'émetteur 20, avec un décalage entre les instants d'émission et d'acquisition qui est principalement fonction des filtres passe-haut et passe-bas mis en oeuvre. Ce décalage est typiquement de l'ordre de 40 µs.

La section 11 de la surface de roulement 10 qui est éclairée est de diamètre 5 centimètres environ, ce qui offre un bon compromis entre précision de la mesure et intégration de l'information.

Les moyens de traitement numériques, qui seront décrits plus loin, transmettent l'information binaire demande d'alarme/absence de demande d'alarme à la carte d'interface calculateur CIC.

La carte d'interface calculateur CIC transmet les données des capteurs C1 au calculateur C2 et génère les signaux utilisés pour commander la carte d'interface utilisateur CIU.

La carte d'interface utilisateur CIU permet à l'utilisateur de choisir les moyens d'alarme et/ou de contrôle 40 qu'il souhaite activer en cas de détection d'un marquage utile. Elle commande et alimente les moyens choisis en cas d'alarme.

Ces moyens d'alarme et/ou de contrôle 40 comprennent un ou plusieurs des moyens d'alarme ci-dessous : des vibreurs dans le siège du conducteur, avec dissociation gauche-droite, un vibreur unique dans le siège du conducteur, sans dissociation gauche-droite, des lampes situées en bas de pare-brise de part et d'autre de la casquette, avec dissociation gauche-droite, des haut-parleurs situés de part et d'autre du tableau de bord reproduisant un son préenregistré, avec dissociation gauche-droite.

L'utilisateur choisi les moyens à activer par l'intermédiaire de boutons poussoirs reliés au calculateur embarqué C2.

Ces moyens d'alarme et/ou de contrôle 40 peuvent également comprendre des moyens de contrôle automatique de certains systèmes du véhicule, comme par exemple le système de freinage ou les feux.

Le calculateur embarqué C2 collecte les informations binaires de demande d'alarme des quatorze capteurs C1, filtre ces demandes d'alarme, commande le déclenchement des moyens d'alarme et/ou de contrôle 40 et gère les mises en défaut des capteurs C1.

Il gère également l'activation et la désactivation du dispositif. Celui-ci est en attente au démarrage du véhicule et ne s'active qu'au-delà d'une vitesse prédéterminée, par exemple 100 km/h. L'utilisateur peut mettre le dispositif en veille en utilisant un bouton poussoir marche/arrêt. Par ailleurs, l'utilisation des clignotants a pour effet de désactiver momentanément le dispositif.

Le calculateur embarqué C2 filtre en particulier les marquages de la surface de roulement 10 qui ne doivent pas déclencher d'alarme, mais qui ne peuvent être distingués d'autres marquages au sol qu'en utilisant les informations d'au moins deux capteurs différents. Ces marquages sont par exemple les chevrons indicateurs de la distance de sécurité.

Le calculateur C2 peut mettre en défaut certains capteurs C1 qui demandent trop souvent des alarmes, par exemple par ce que la surface de roulement est irrégulière et mal entretenue.

Le dispositif de l'invention comprend, selon un aspect avantageux, des moyens pour détecter des marquages sur la surface de roulement 10 par mesure de la variation relative sur un intervalle de temps prédéterminé de l'amplitude du signal analogique A produit par le récepteur 30.

A cet effet, les moyens de traitement numérique des valeurs du signal analogique A échantillonnées de chaque capteurs C1 comprennent des moyens pour calculer à chaque instant d'acquisition Tk des première et seconde moyennes glissantes Mn et Mp respectivement des n et p dernières valeurs acquises, p étant supérieur à n, et la différence Delta entre les première et seconde moyennes Mn et Mp, et des moyens pour effectuer un premier test, positif si ladite différence Delta est supérieure à une première valeur prédéterminée DeltaV1, négatif sinon, le capteur C1 détectant que le véhicule coupe un marquage si ce premier test est positif.

L'entier n est typiquement supérieur ou égal à 6, et il est égal à 8 dans un mode de réalisation préféré de l'invention.

L'entier p est typiquement supérieur ou égal à 48, et il est égal à 64 dans un mode de réalisation préféré de l'invention.

La moyenne glissante Mp, effectuée sur un nombre important de périodes T, est une indication du niveau moyen du signal. La moyenne glissante Mn, effectuée sur un nombre plus réduit de périodes, assure le filtrage des petites oscillations du signal.

Le premier test est positif, c'est-à-dire Mn est supérieur à Mp, quand le signal analogique A augmente pendant plusieurs périodes T et devient supérieur au niveau moyen représenté par Mp. Le dispositif considère alors que le capteur C1 éclaire au moins partiellement un marquage.

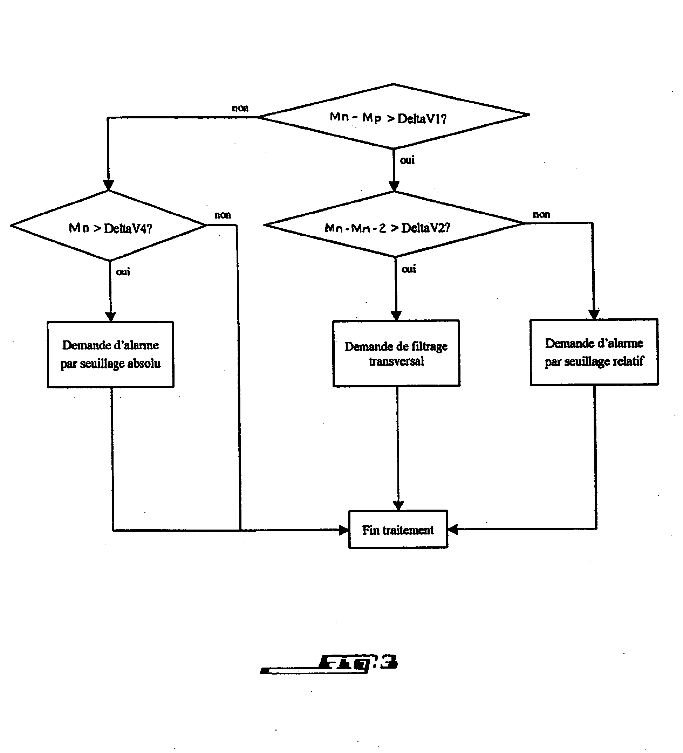

Le dispositif comprend des moyens pour affiner ce résultat suivant l'algorithme général représenté sur la figure 3 et distinguer les cas suivants des marquages inutiles :
- le véhicule coupe une ligne blanche longitudinale, avec une incidence assez faible,
- le véhicule roule parallèlement à une ligne blanche continue longitudinale, le capteur C1 éclairant constamment la ligne blanche,
- le véhicule coupe une ligne blanche interrompue par une extrémité avec une incidence proche de la normale.

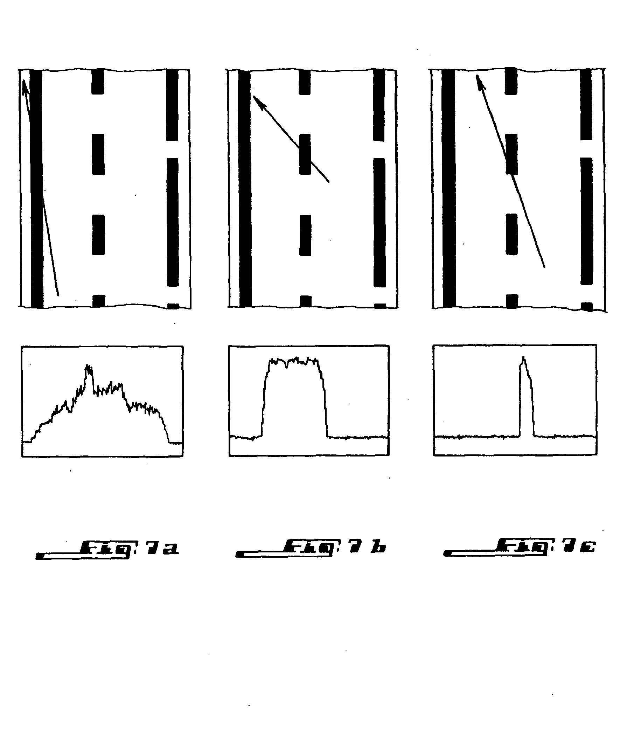

Le premier cas de figure est illustré à la figure 7a et le troisième à la figure 7c, ainsi que les signaux analogiques correspondants générés par les détecteurs des capteurs C1 coupant ces marquages.

Dans le but de distinguer le second cas, les moyens de traitement numérique de chaque capteur C1 comprennent des moyens pour effectuer un deuxième test si le premier test est négatif, ce deuxième test étant positif si la première moyenne glissante Mn est supérieure à une deuxième valeur prédéterminée DeltaV4, et négatif sinon, le capteur C1 détectant que le véhicule roule le long d'une ligne blanche continue longitudinale si ce deuxième test est positif.

En effet, lorsque le capteur C1 suit la ligne blanche, les valeurs de Mn et Mp deviennent rapidement sensiblement égales et se stabilisent à une valeur élevée. On peut alors détecter ce cas de figure par comparaison directe de Mn avec la deuxième valeur prédéterminée DeltaV4. DeltaV4 est plus élevée que DeltaV1.

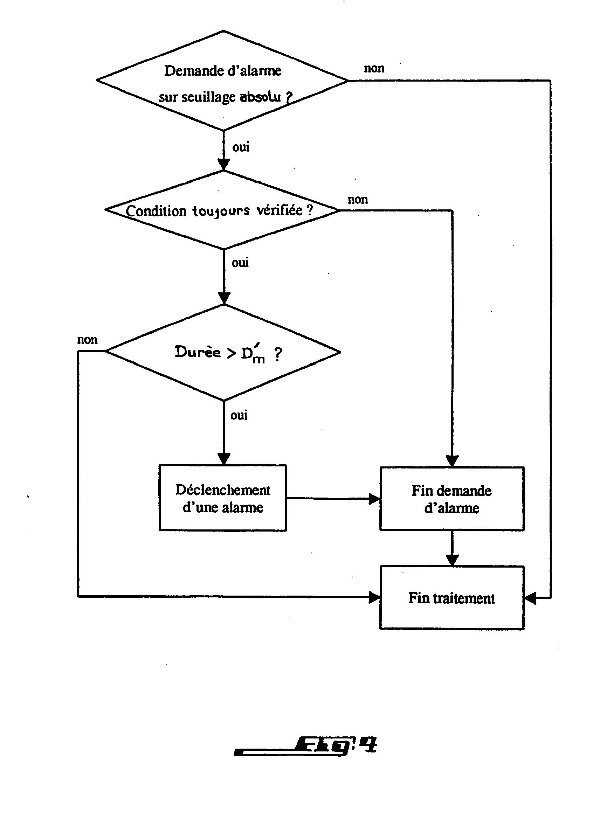

Les moyens de traitement numérique du capteur C1 émettent une demande d'alarme dite par seuillage absolu si le deuxième test est positif et la traitent par une procédure correspondante, représentée sur la figure 4. Si au contraire les premier et deuxième tests sont négatifs, le capteur C1 considère qu'aucune ligne blanche n'a été détectée et attend qu'une nouvelle valeur Ak du signal analogique soit acquise pour rafraîchir les valeurs de Mn et Mp et recommencer les tests.

Comme le montre la figure 4, si une demande d'alarme par seuillage absolu est émise à un instant d'acquisition Tk, et si ces conditions se vérifient continuellement pendant une troisième durée Dm' suivant ledit instant d'acquisition Tk, le capteur C1 émet une demande de déclenchement d'alarme vers le calculateur C2 qui active les moyens d'avertissement et/ou de contrôle 40 après filtrage.

La troisième durée Dm' est au moins égale à la durée nécessaire pour que le véhicule franchisse une distance de 20 cm. Elle est typiquement égale à la durée nécessaire pour parcourir 20 cm.

Cette deuxième condition avant le déclenchement de l'alarme permet de limiter les déclenchements intempestifs des moyens d'alarme et/ou de contrôle 40 dûs à des irrégularités dans la chaussée.

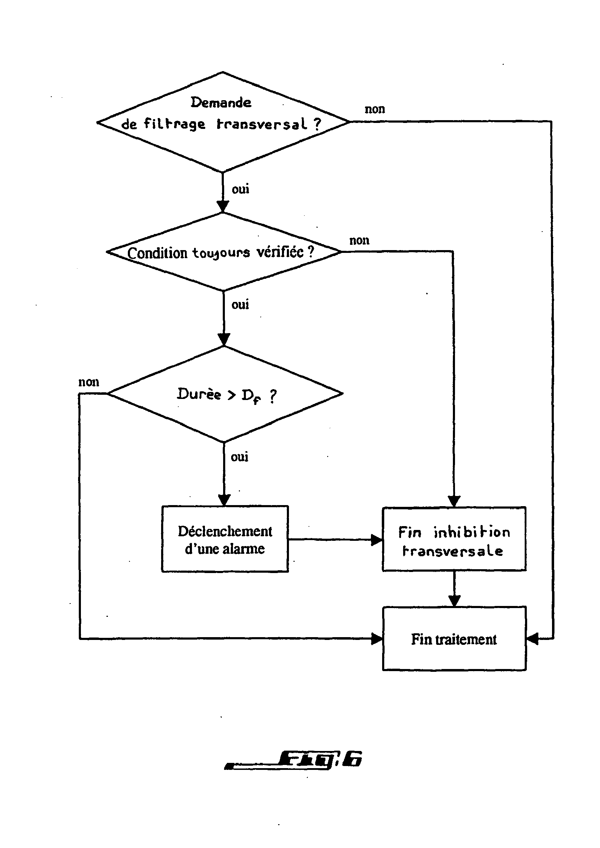

Pour distinguer le troisième cas de figure évoqué ci-dessus, c'est-à-dire le cas d'une ligne transversale, les moyens de traitement numérique comprennent des moyens pour, si le premier test est positif à un instant d'acquisition Tk, calculer une différence Delta2 entre la valeur prise par la première moyenne glissante Mn à l'instant d'acquisition Tk et la valeur Mn-2 prise par cette première moyenne glissante deux périodes avant l'instant d'acquisition Tk, et effectuer un troisième test, ce troisième test étant positif si ladite différence Delta2 est supérieure à une troisième valeur prédéterminée DeltaV2, et négatif sinon, le capteur C1 détectant que le véhicule coupe un marquage transversalement si ce troisième test est positif. Les moyens de traitement numérique du capteur C1 émettent alors une demande de filtrage transversal et la traitent par une procédure correspondante représentée sur la figure 6.

La différence entre Mn et Mn-2 représente la dérivée de la fonction Mn par rapport au temps. Cette dérivée est utilisée pour faire la distinction entre le cas où le capteur C1 aborde la ligne blanche longitudinalement avec un angle d'incidence faible, c'est-à-dire en mordant progressivement sur cette ligne, et le cas où le capteur C1 aborde une ligne blanche transversale avec une incidence proche de la normale, c'est-à-dire en mordant très rapidement sur cette ligne.

Dans le premier cas le signal analogique augmentera relativement plus lentement, comme on le voit sur les figures 7a et 7b, alors que dans le deuxième cas le signal augmentera relativement plus brutalement, comme on peut le voir sur la figure 7c.

Une simulation numérique montre ainsi qu'une ligne blanche longitudinale franchie à 240 km/h sous une incidence de 5°, valeur très largement surévaluée à cette vitesse, conduit à une augmentation du signal cinq fois plus lente qu'un marquage transversal franchi sous incidence normale à 80 km/h, toutes choses étant égales par ailleurs.

Le traitement de la demande de filtrage transversal est illustré sur la figure 6. Si à un instant d'acquisition Tk le premier test est positif et le troisième test est positif, et si ces conditions se vérifient continuellement pendant une deuxième durée Df suivant ledit instant d'acquisition Tk, le capteur C1 émet une demande de déclenchement d'alarme vers le calculateur C2, qui active après filtrage les moyens d'avertissement et/ou de contrôle 40.

Df est au moins égale à la durée nécessaire pour que le véhicule franchisse une distance de 20 cm à 80 km/h. Elle est typiquement égale à la durée nécessaire pour que le véhicule franchisse une distance de 30cm à 80 km/h.

Si ces conditions cessent de se vérifier avant que la deuxième durée Df soit écoulée, la demande de filtrage prend fin sans déclenchement des moyens d'avertissement et/ou de contrôle 40, et le capteur C1 attend qu'une nouvelle valeur Ak du signal analogique soit acquise pour rafraîchir les valeurs de Mn et Mp et recommencer les tests.

Cette condition de durée permet de distinguer le cas d'un marquage kilométrique transversal d'autoroute, et plus généralement de toutes les lignes transversales de faibles largeurs, du cas des lignes blanches longitudinales interrompues prises par une extrémité à une incidence proche de la normale.

Les marquages kilométriques transversaux sont en effet de longueurs inférieures à 30 cm et ne conduisent donc pas au déclenchement des moyens d'avertissement et/ou de contrôle 40.

Au contraire, les lignes blanches longitudinales interrompues prises par une extrémité à une incidence proche de la normale, comme sur la figure 7c, conduisent au déclenchement des moyens d'avertissement et/ou de contrôle 40.

Il est à noter que cette condition de durée est efficace même pour des véhicules roulant à plus de 80 km/h. En effet, un véhicule roulant à 240 km/h, qui est la vitesse maximum considérée pour le dispositif, couvrira 90 cm et non 30 cm pendant la durée Df. Or, les lignes blanches longitudinales interrompues sont d'une longueur supérieure à 90 cm, et l'angle d'incidence se rapproche de la normale quand la vitesse augmente.

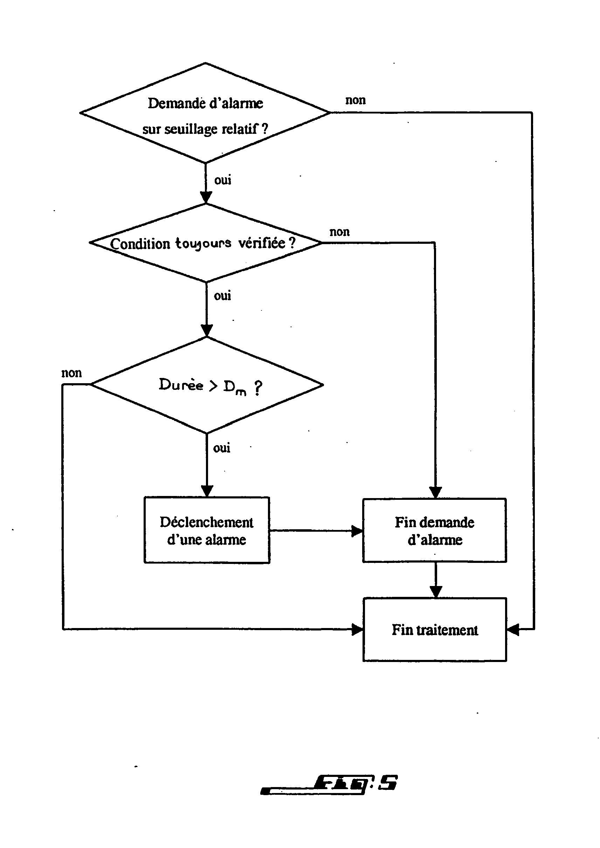

Dans le cas où à un instant d'acquisition Tk le premier test est positif et le troisième test est négatif, les moyens de traitement numérique du capteur C1 émettent une demande d'alarme par seuillage relatif, signifiant qu'une ligne blanche longitudinale franchie avec une incidence faible a été détectée et correspondant au cas de la figure 7a, et la traitent par une procédure correspondante représentée sur la figure 5.

Comme le montre la figure 5, si la première moyenne glissante Mn reste supérieure pendant une première durée Dm suivant ledit instant d'acquisition Tk à la seconde moyenne glissante Mp calculée audit instant d'acquisition Tk, le capteur C1 émet une demande d'alarme vers le calculateur C2 qui active après filtrage les moyens d'avertissement et/ou de contrôle 40.

Cette condition de durée permet simplement de limiter les déclenchements intempestifs des moyens d'alarme et/ou de contrôle 40, comme précédemment.

Dm est au moins égale à la durée nécessaire pour que le véhicule franchisse une distance de 20 cm.

Les moyens d'alarme et/ou de contrôle 40 sont désactivés automatiquement au bout d'une durée prédéterminée, par exemple fixée à 200 ms, pour éviter un blocage du dispositif dans un cas non prévu lors de la conception.

## Revendications

1. Dispositif de surveillance routière embarqué sur un véhicule routier apte à se déplacer sur une surface de roulement (10), comprenant au moins un capteur (C1) orienté vers cette surface de roulement (10), ce capteur (C1) comprenant un émetteur (20) d'ondes éclairant une section (11) de la surface de roulement (10) située face au capteur (C1), un récepteur (30) captant lesdites ondes émises par l'émetteur (20) et réfléchies par la section (11), et produisant un signal analogique (A) d'amplitude proportionnelle à l'intensité des ondes captées, des moyens d'avertissement et/ou de contrôle (40) reliés au capteur (C1), des moyens pour détecter des marquages sur la surface de roulement (10), les moyens détectant les marquages sur la surface de roulement (10) par mesure de la variation relative sur un intervalle de temps prédéterminé de l'amplitude du signal analogique (A) produit par le récepteur (30), et des moyens de traitement logique du signal analogique (A), comprenant des moyens pour acquérir des valeurs (Ak) de l'amplitude du signal analogique (A) à des instants d'acquisition (Tk) successifs séparés par une période (T) constante, **caractérisé en ce qu'**il comprend des moyens pour calculer à chaque instant d'acquisition (Tk) des première et seconde moyennes glissantes (Mn, Mp) respectivement des n et p dernières valeurs acquises, p étant supérieur à n, et la différence (Delta) entre les première et seconde moyennes (Mn) et (Mp), et des moyens pour effectuer un premier test, positif si ladite différence (Delta) est supérieure à une première valeur prédéterminée (DeltaV1), négatif sinon, le dispositif détectant que le véhicule coupe un marquage si ce premier test est positif.

2. Dispositif de surveillance selon la revendication 1, **caractérisé en ce que** les moyens de traitement logique comprennent des moyens pour effectuer un deuxième test si le premier test est négatif, ce deuxième test étant positif si la première moyenne glissante (Mn) est supérieure à une deuxième valeur prédéterminée (DeltaV4), et négatif sinon, le dispositif détectant que le véhicule roule le long d'un marquage continu si ce deuxième test est positif.

3. Dispositif de surveillance selon la revendication 1 ou 2, **caractérisé en ce que** les moyens de traitement logique comprennent des moyens pour, si le premier test est positif à un instant d'acquisition (Tk), calculer une différence (Delta2) entre la valeur prise par la première moyenne glissante (Mn) à l'instant d'acquisition (Tk) et la valeur (Mn-2) prise par cette première moyenne glissante deux périodes avant (Tk), et effectuer un troisième test, ce troisième test étant positif si ladite différence (Delta2) est supérieure à une troisième valeur prédéterminée (DeltaV2.), et négatif sinon, le dispositif détectant que le véhicule coupe un marquage transversalement si ce troisième test est positif.

4. Dispositif de surveillance selon la revendication 3, **caractérisé en ce que** les moyens d'avertissement et/ou de contrôle (40) sont activés si à un instant d'acquisition (Tk) le premier test est positif et le troisième test est négatif, et si la première moyenne glissante (Mn) reste supérieure pendant une première durée (Dm) suivant ledit instant d'acquisition (Tk) à la seconde moyenne glissante (Mp) calculée audit instant d'acquisition (Tk) .

5. Dispositif de surveillance selon l'une quelconque des revendications 3 à 4, **caractérisé en ce que** les moyens d'avertissement et/ou de contrôle (40) sont activés si à un instant d'acquisition (Tk) le premier test est positif et le troisième test est positif, et si ces conditions se vérifient continuellement pendant une deuxième durée (Df) suivant ledit instant d'acquisition (Tk).

6. Dispositif de surveillance selon l'une quelconque des revendications 2 à 5, **caractérisé en ce que** les moyens d'avertissement et/ou de contrôle (40) sont activés si à un instant d'acquisition (Tk) le premier test est négatif et le deuxième test est positif, et si ces conditions se vérifient continuellement pendant une troisième durée (Dm') suivant ledit instant d'acquisition (Tk).

7. Dispositif de surveillance selon l'une quelconque des revendications 1 à 6, **caractérisé en que** n est supérieur ou égal à 6.

8. Dispositif de surveillance selon l'une quelconque des revendications 1 à 7, **caractérisé en que** p est supérieur ou égal à 48.

9. Dispositif de surveillance selon l'une quelconque des revendications précédentes combinée avec les revendications 4 et 6, **caractérisé en que** les première et troisième durées (Dm) et (Dm') sont au moins égales aux durées nécessaires pour que le véhicule franchisse une distance de 20 cm.

10. Dispositif de surveillance selon l'une quelconque des revendications précédentes combinée avec la revendication 5, **caractérisé en que** la deuxième durée (Df) est au moins égale à la durée nécessaire pour que le véhicule franchisse une distance de 20 cm.

## Claims

1. Road monitoring device on board a road vehicle capable of moving on a road surface (10), comprising at least one sensor (C1) oriented toward this load surface (10), this sensor (C1) comprising a transmitter (20) of waves illuminating a section (11) of the road surface (10) situated facing the sensor (C1), a receiver (30) sensing the said waves transmitted by the transmitter (20) and reflected by the section (11), and producing an analogue signal (A) with an amplitude proportional to the intensity of the sensed waves, warning and/or control means (40) connected to the sensor (C1), means for detecting markings of the road surface (10), the means detecting the markings on the road surface (10) by measuring the relative variation over a predetermined time period of the amplitude of the analogue signal (A) produced by the receiver (30), and logical means for processing the analogue signal (A), comprising means for acquiring values (Ak) of the amplitude of the analogue signal (A) at successive acquisition times (Tk) separated by a constant period (T), **characterized in that** it comprises means for computing at each acquisition time (Tk) first and second moving averages (Mn, Mp) respectively of the last n and p of values acquired, p being greater than little n, and the difference (Delta) between the first and second averages (Mn) and (Mp), and means for carrying out a first test, positive if the said difference (Delta) is greater than a first predetermined value (DeltaV1), otherwise negative, the device detecting that the vehicle crosses a marking if this first test is positive.

2. Monitoring device according to Claim 1, **characterized in that** the logical processing means comprise means for carrying out a second test if the first test is negative, this second test being positive if the first moving average (Mn) is greater than a second predetermined value (DeltaV4), and negative otherwise, the device detecting that the vehicle is travelling along a continuous marking if this second test is positive.

3. Monitoring device according to Claim 1 or 2, **characterized in that** the logical processing means comprise means for, if the first test is positive at an acquisition time (Tk), computing a difference (Delta2) between the value taken by the first moving average (Mn) at the acquisition time (Tk) and the value (Mn-2) taken by this first moving average two periods before (Tk), and carrying out a third test, this third test being positive if the said difference (Delta2) is greater than a third predetermined value (DeltaV2), and negative otherwise, the device detecting that the vehicle crosses a marking transversely if this third test is positive.

4. Monitoring device according to Claim 3, **characterized in that** the warning and/or control means (40) are activated if, at an acquisition time (Tk), the first test is positive and the third test is negative, and if the first moving average (Mn) remains greater during a first period (Dm) following the said acquisition time (Tk) than the second moving average (Mp) computed at the said acquisition time (Tk).

5. Monitoring device according to either one of Claims 3 or 4, **characterized in that** the warning and/or control means (40) are activated if, at an acquisition time (Tk), the first test is positive and the third test is positive, and if these conditions are verified continually for a second period (Df) following the said acquisition time (Tk).

6. A supervision device according to any one of Claims 2 to 5, **characterized in that** the warning and/or control means (40) are activated if, at an acquisition time (Tk), the first test is negative and the second test is positive, and if these conditions are verified continually for a third period (Dm') following the said acquisition time (Tk).

7. Monitoring device according to any one of Claims 1 to 6, **characterized in that** n is greater than or equal to 6.

8. Monitoring device according to any one of Claims 1 to 7, **characterized in that** p is greater than or equal to 48.

9. Monitoring device according to any one of the preceding claims combined with Claims 4 and 6, **characterized in that** the first and third periods (Dm) and Dm') are at least equal to the periods necessary for the vehicle to travel a distance of 20 cm.

10. Supervision device according to any one of the preceding claims combined with Claim 5, **characterized in that** the second period (Df) is at least equal to the period necessary for the vehicle to travel a distance of 20 cm.

## Patentansprüche

1. Bordverkehrsüberwachungsvorrichtung auf einem Straßenfahrzeug, die geeignet ist, sich auf einer Straßenfläche (10) fortzubewegen und die mindestens einen Sensor (C1), der auf diese Straßenfläche (10) gerichtet ist, wobei dieser Sensor (C1) einen Sender (20) für Wellen aufweist, die einen Abschnitt (11) der Straßenfläche (10) beleuchten, der dem Sensor (C1) gegenüberliegend gelegen ist, einen Empfänger (30), der die durch den Sender (20) ausgesendeten und durch den Abschnitt (11) reflektierten Wellen auffängt und ein analoges Signal (A) erzeugt, dessen Amplitude proportional zur Stärke der aufgefangenen Wellen ist, Warnungs- und/oder Steuerungsmittel (40), die mit dem Sensor (C1) verbunden sind, Mittel zum Ermitteln der Markierungen auf der Straßenfläche (10), wobei die Mittel die Markierungen auf der Straßenfläche (10) durch Messung der relativen Veränderung der Amplitude des durch den Empfänger (30) erzeugten analogen Signals (A) über ein vorbestimmtes Zeitintervall ermitteln, und Mittel zur logischen Verarbeitung des analogen Signals (A) aufweist, die Mittel zum Erfassen von Werten (Ak) der Amplitude des analogen Signals (A) zu aufeinanderfolgenden Erfassungszeitpunkten aufweisen, die durch eine konstante Periode (T) getrennt sind, **dadurch gekennzeichnet, dass** sie Mittel zum Berechnen des ersten und zweiten gleitenden Mittelwerts (Mn, Mp) der n beziehungsweise p letzten erfassten Werte, wobei p größer als n ist, zu jedem Erfassungszeitpunkt (Tk) und der Differenz (Delta) zwischen dem ersten und dem zweiten Mittelwert (Mn) und (Mp) und Mittel zur Durchführung eines ersten Tests aufweisen, der positiv ist, wenn die Differenz (Delta) größer ist als ein erster vorbestimmter Wert (DeltaV1), und anderenfalls negativ ist, wobei die Vorrichtung ermittelt, dass das Fahrzeug eine Markierung kreuzt, wenn dieser erste Test positiv ist.

2. Überwachungsvorrichtung nach Anspruch 1, **dadurch gekennzeichnet, dass** die Mittel zur logischen Verarbeitung Mittel zur Durchführung eines zweiten Tests aufweisen, wenn der erste Test negativ ist, wobei dieser zweite Test positiv ist, wenn der erste gleitende Mittelwert (Mn) größer ist als ein zweiter vorbestimmter Wert (DeltaV4), und andernfalls negativ ist, wobei die Vorrichtung ermittelt, dass das Fahrzeug entlang einer ununterbrochenen Markierung fährt, wenn dieser zweite Test positiv ist.

3. Überwachungsvorrichtung nach Anspruch 1 oder 2, **dadurch gekennzeichnet, dass** die Mittel zur logischen Verarbeitung Mittel aufweisen, um, wenn der erste Test zu einem Erfassungszeitpunkt (Tk) positiv ist, eine Differenz (Delta2) zwischen dem zum Erfassungszeitpunkt (Tk) durch den ersten gleitenden Mittelwert (Mn) genommenen Wert und dem durch diesen ersten gleitenden Mittelwert zwei Perioden davor (Tk) genommenen Wert (Mn-2) zu berechnen und einen dritten Test durchzuführen, wobei dieser dritte Test positiv ist, wenn die Differenz (Delta2) größer ist als ein dritter vorbestimmter Wert (DeltaV2), und andernfalls negativ ist, wobei die Vorrichtung ermittelt, dass das Fahrzeug eine Markierung quer kreuzt, wenn dieser dritte Test positiv ist.

4. Überwachungsvorrichtung nach Anspruch 3, **dadurch gekennzeichnet, dass** die Warnungs- und/oder Steuerungsmittel (40) aktiviert werden, wenn zu einem Erfassungszeitpunkt (Tk) der erste Test positiv ist und der dritte Test negativ ist, und wenn der erste gleitende Mittelwert (Mn) während einer ersten Dauer (Dm), die auf den Erfassungszeitpunkt (Tk) folgt, größer bleibt als der zweite gleitende Mittelwert (Mp), der zu diesem Erfassungszeitpunkt (Tk) berechnet wurde.

5. Überwachungsvorrichtung nach einem der Ansprüche 3 bis 4, **dadurch gekennzeichnet, dass** die Warnungs-und/oder Steuerungsmittel (40) aktiviert werden, wenn zu einem Erfassungszeitpunkt (Tk) der erste Test positiv ist und der dritte Test positiv ist und wenn sich diese Bedingungen während einer zweiten Dauer (Df), die auf den Erfassungszeitpunkt (Tk) folgt, ununterbrochen bestätigen.

6. Überwachungsvorrichtung nach einem der Ansprüche 2 bis 5, **dadurch gekennzeichnet, dass** die Warnungs-und/oder Steuerungsmittel (40) aktiviert werden, wenn zu einem Erfassungszeitpunkt (Tk) der erste Test negativ ist und der zweite Test positiv ist und wenn sich diese Bedingungen während einer dritten Dauer (Dm'), die auf den Erfassungszeitpunkt (Tk) folgt, ununterbrochen bestätigen.

7. Überwachungsvorrichtung nach einem der Ansprüche 1 bis 6, **dadurch gekennzeichnet, dass** n größer oder gleich 6 ist.

8. Überwachungsvorrichtung nach einem der Ansprüche 1 bis 7, **dadurch gekennzeichnet, dass** p größer oder gleich 48 ist.

9. Überwachungsvorrichtung nach einem der vorhergehenden Ansprüche kombiniert mit den Ansprüchen 4 und 6, **dadurch gekennzeichnet, dass** die erste und die dritte Dauer (Dm) und (Dm') mindestens gleich den Dauern sind, die für das Zurücklegen einer Distanz von 20 cm durch das Fahrzeug erforderlich sind.

10. Überwachungsvorrichtung nach einem der vorhergehenden Ansprüche kombiniert mit Anspruch 5, **dadurch gekennzeichnet, dass** die zweite Dauer (Df) mindestens gleich der Dauer ist, die für das Zurücklegen einer Distanz von 20 cm durch das Fahrzeug erforderlich ist.
